# EUROPÄISCHE PATENTSCHRIFT

(11) **EP 3 805 059 B1**
(45) Veröffentlichungstag und Bekanntmachung des Hinweises auf die Patenterteilung: **28.12.2022**
(21) Anmeldenummer: 19201708.5
(22) Anmeldetag: 07.10.2019
(51) Int. Cl.: B60T 13/74, F16D 65/18, F16D 55/227, F16D 65/097, F16D 121/24, F16D 125/50, F16D 127/06, F16D 129/08

(54) **SCHEIBENBREMSE MIT EINEM ELEKTROMECHANISCHEN AKTUATOR, INSBESONDERE EINEM ELEKTROMECHANISCHEN PARKBREMSAKTUATOR**
DISC BRAKE COMPRISING AN ELECTROMECHANICAL ACTUATOR, PARTICULARLY AN ELECTROMECHANICAL PARKING BRAKE ACTUATOR
FREIN À DISQUE AVEC UN ACTIONNEUR ÉLECTROMÉCANIQUE, EN PARTICULIER UN ACTIONNEUR ÉLECTROMÉCANIQUE DE FREIN DE STATIONNEMENT

(43) Veröffentlichungstag der Anmeldung: 14.04.2021
(73) Patentinhaber: ZF CV Systems Global GmbH, 3006 Bern (CH)
(72) Erfinder: HENNING, Paul, 68723 Schwetzingen (DE)
(74) Vertreter: Copi, Joachim

(56) Entgegenhaltungen:
- WO-A1-03/071150
- CN-A- 107 289 044
- DE-A1-102011 086 152
- US-A1- 2018 001 878

## Beschreibung

Die Erfindung betrifft eine Scheibenbremse mit einem elektromechanischen Aktuator für Fahrzeuge, insbesondere für Nutzfahrzeuge.

Elektromechanische Aktautoren zum Betätigen von Bremseinrichtungen sind hinlänglich bekannt. In der Regel umfassen elektromechanische Aktuatoren einen Elektromotor zum Erzeugen eines Antriebsmoments, einer Getriebeeinrichtung, insbesondere eine Getriebeeinrichtung mit einer Kurvenscheibe zur Umwandlung des Antriebsmomentes, also einer Drehbewegung, in eine translatorische Bewegung für eine Stelleinheit. Die Stelleinheit spannt eine Bremsscheibe über zwei Bremsbeläge während eines Bremsvorgangs zu. Zum Blockieren eines Fahrzeuges weisen die elektromechanischen Aktuatoren einen Parksperrmechanismus auf. Unter anderen sind zum Blockieren des elektromechanischen Aktuators Bremsen vorhanden. Im Bereich der Fahrzeugtechnik sind allgemein schaltbare Bremsen bekannt. Unter einer schaltbaren Bremse ist eine Bremse zu verstehen die einen Kraftfluss zwischen einer abtriebsseitigen Welle und eine angetriebene Welle verbinden und trennen kann.

Eine als Parksperrmechanismus eingerichtete Bremse ist zum Beispiel aus der DE19955080A1 bekannt. Als Parksperrmechanismus ausgebildete Bremsen sind umgangssprachlich auch als Bremse bekannt. Die Bremse ist direkt mit dem Elektromotor verbunden. Die Bremse und der Elektromotor sind gemeinsam in einem Gehäuse verbaut. Blockiert wird ein Gewindetrieb über eine horizontal zu einem Bremsbelag angeordnete Antriebswelle, der die Drehbewegung des Elektromotors in eine Translationsbewegung umsetzt. Die Bremse arbeitet mit einer Spreizeinrichtung, die die Öffnung der Bremse in Abhängigkeit der Drehrichtung bewirkt.

Eine weitere Anordnung einer Bremse in einem elektromechanischen Aktuator zeigt die EP0275783B1. Die Bremse blockiert ein Kugelgewindetrieb, der die Bremsscheibe über Bremsbeläge zuspannt.

In der DE19650405A1 wir ebenfalls ein Kugelgewindetrieb horizontal zu den Bremsbelägen mit einer Bremse blockiert, um den Parksperrmechanismus zu realisieren. Gegenüber der EP0275783B1 ist die Bremse jedoch als formschlüssige Bremse mit Zähnen ausgestaltet.

Die DE19752543A1 beschreibt allgemein eine Magnetbremse für einen elektromechanischen Aktuator, wobei die Drehbewegung des Elektromotors mittels der Magnetbremse und einem beweglichen Stift direkt fixiert wird. Der Stift wirkt dabei in einem 90° Winkel zur Welle des Elektromotors.

Aus der WO03/071150A1 geht eine elektronisch geregelte Scheibenbremse hervor, wobei die Bremsscheibe über eine Kugelrampenvorrichtung des Aktuators zugespannt wird. Die Scheibenbremse bleibt im spannungslosen Zustand des Elektromotors in Position indem der Elektromotor mittels einer Bremse blockiert wird.

Die DE102011086152 A1 offenbart eine elektromechanischen Aktuator mit zwei Kurvenscheiben zum Zuspannen von Bremsbelägen. Der elektromechanische Aktuator weist eine als Wälzkörperrampenmechanismus ausgebildete Kraftübertragungseinrichtung auf, die über Antriebswellen mit einem Elektromotor gekoppelt ist. In dem Elektromotor ist eine Magnetkupplung ausgebildet, die den Aktuator in drei Zustände versetzten kann, wobei ein Zustand als Sperrfunktion ausgebildet ist und die Aktuatorik blockiert. Der Motor kann dann in einen Spannungslosen Zustand versetzt werden und die Bremsscheibe bleibt über die Bremsbeläge weiterhin zu gespannt.

Aufgabe der Erfindung ist es, den in der Anmeldung genannten Stand der Technik zu überwinden und eine Scheibenbremse mit einem elektromechanischen Aktuator, insbesondere einem elektromechanischen Parkbremsaktuator bereitzustellen, der kompakt baut, kostengünstig ist und eine einfach zu bedienende Notentriegelung aufweist.

Gelöst wird die Aufgabe dadurch, dass eine Scheibenbremse einen elektromechanischen Aktuator aufweist, der eine Magnetbremse, eine Antriebswelle, ein Getriebe und einen Elektromotor umfasst, und die Magnetbremse formschlüssig an der Antriebswelle zwischen dem Elektromotor und einem Antriebswellenausgang der Antriebswelle anangeordnet ist. Um eine Parkbremsfunktion mit dem elektromechanischen Aktuator bei einem abgestellten und stromlos geschalteten Fahrzeug zu realisieren, muss ein Form- oder Kraftschluss über die Magnetbremse realisiert werden. Die Magnetbremse ist an einer Stelle des Momenten-/Kraftflusses des elektromechanischen Aktuators, also formschlüssig an der Antriebswelle zwischen dem Elektromotor und dem Antriebswellenausgang, angeordnet bei dem das von der Magnetbremse zu übertragende Drehmoment am geringsten ist, um die Bauteile der Magnetbremse so klein und kostengünstig wie möglich zu halten. Als Drehmoment ist das zu übertragende Drehmoment von einem als Untersetzungsgetriebe ausgebildeten Getriebe direkt an den Elektromotor zu verstehen.

In einer Weiterbildung ist das von der Magnetbremse zu übertragenden Drehmoment an der Antriebswelle, zwischen dem Elektromotor und der Kurvenscheibe am geringsten. Während einer Parkbremsfunktion arretiert die Magnetbremse die Kurvenscheibe über die Antriebswelle und des Getriebes. Am Elektromotor sind die zu blockierenden Momente am geringsten. Der Elektromotor weist bevorzugt ein Drehmoment von ca. 10 Nm auf, was durch das Getriebe bevorzugt mit 1: 25 übersetzt wird, sodass der Elektromotor bei einem elektromechanischen Parkbremsaktuator, an der Kurvenscheibe, ein Drehmoment bis zu 250 Nm erzeugt. Es ist also einfacher, am Elektromotor eine Axialkraft zum Blockieren über die Druckfeder für 10 Nm zu erzeugen, als eine Axialkraft zum Blockieren der Druckfeder für 250 Nm am Eingang des Elektromotors.

In einer weiteren Ausgestaltung ist die Magnetbremse an einem Getriebeeingang, axial auf der gegenüberliegenden Seite des Elektromotors, angeordnet, wodurch Bauraumvorteile entstehen und der elektromechanische Aktuator im Gesamtumfang kompakt baut.

Die Magnetbremse ist erfindungsgemäß als kraftschlüssige Reibbremse ausgebildet. Unter einer als Magnetbremse ausgebildeten Reibbremse, auch Rutschbremse genannt, ist vorliegend eine Bremse zu verstehen, die eine Drehbewegung der Antriebswelle verhindert. Die Antriebsseite ist mit einem Elektromagneten oder einer Magnetspule versehen. In dem von den Elektromagneten oder der Magnetspule erzeugten Magnetfeld verschiebt sich der Anker, aufgrund der Magnet- oder Federkraft, in axialer Richtung. Der Anker wird über einen zwischen dem Elektromagnet oder der Magnetspule und dem beweglichen Anker angeordneten Luftspalt angeregt. Die Parkbremsfunktion des elektromechanischen Aktuators wird erzeugt, wenn die Magnetspule spannungslos ist. Dann drücken die Druckfedern den Anker gegen die Reibscheibe und weiter gegen das Magnetbremsgehäuse. Damit ist ein Kraftschluß gegeben, der ein Verdrehen der Motorwelle verhindert. Wenn die Spannung angelegt wird, wirkt die Magnetkraft auf den Anker und zieht den Anker entgegen der Kraft der Druckfedern. Damit wird der Spalt zwischen dem Magnetbremsgehäuse, der Reibscheibe und dem Anker wieder vergrößert und die Antriebswelle kann frei drehen.

In einer weiteren vorteilhaften Ausgestaltung weist die als kraftschlüssige Reibbremse ausgebildete Magnetbremse eine Reibscheibe mit beidseitig der Reibscheibe gegenüberliegend angeordneten Reibbelägen auf und die Reibscheibe ist an der Antriebswelle, in einem Elektromotor oder in einem Magnetbremsgehäuse, angeordnet. Die Reibscheibe ist formschlüssig mit der Antriebswelle vor dem Getriebeeingang verbunden. Um die Massenträgheitsmomente so gering wie möglich zu halten, und um die Dynamik des Elektromotors nicht einzuschränken, werden die Reibbeläge der Magnetbremse im Elektromotorgehäuse oder im Magnetbremsgehäuse angeordnet, um in dem Elektromotorgehäuse oder im Magnetbremsgehäuse das Reactio Moment, auch bekannt als Reaktionsmoment abzustützen.

Die Antriebswelle weist zum mechanischen Lösen der Bremsbeläge von der Bremsscheibe erfindungsgemäß eine Aufnahme für ein Werkzeug auf. Die Aufnahme ist ein Teil der Antriebswelle. Das heißt, die Aufnahme wird mit der Antriebswelle in den gleichen Arbeitsschritten hergestellt. Die Aufnahme kann aber auch als eigenständiges Bauteil ausgebildet sein, dass an dem Antriebswellenausgang angeordnet ist. Die Aufnahme ist zum mechanischen Lösen der Bremsbeläge von der Bremsscheibe ausgebildet.

Besonders bevorzugt ist die Aufnahme zum mechanischen Lösen der Bremsbeläge im Defektfall ausgebildet.

Besonders bevorzugt ist die Aufnahme in einer weiteren Ausgestaltung ein Sechskant. Ein Sechskant ist eine allgemein gängige Form für Schraubenschlüssel, so dass im Falle eines Defekts des elektromechanischen Aktuators, eine Vielzahl an Bedienern den elektromechanischen Aktuator mechanisch lösen können. Das heißt, dass im Falle eines Defekts, mit einem Werkzeug an dem Sechskant die Antriebswelle gedreht werden kann. Die Magnetbremse ist in Ihrer Schließkraft bzw. ihrem maximalen Blockiermoment so ausgelegt, das die Reibbeläge, auch Reibpaarung genannt, durchrutschen, sobald der Bediener bei einer Werkzeugdrehung das Blockiermoment überschreitet.

In einer weiteren Ausführung weist die Magnetbremse ein Lager zur Aufnahme einer Lagerstelle der Antriebswelle auf. Genauer gesagt, die Lagerstelle ist an dem Magnetbremsgehäuse der Magnetbremse angeordnet, sodass Bauraum im Aktuatorgehäuse oder Bauraum in einem Gehäuse zur Aufnahme des Elektromotors für eine separate Lagerstelle gespart wird.

Es hat sich weiterhin als Vorteil erwiesen, dass die Antriebswelle, der Elektromotor, die Magnetbremse und das Getriebe, in Bezug auf die Bremsbeläge, horizontal in dem elektromechanischen Aktuator angeordnet sind. Der elektromechanische Aktuator ist in Bezug auf die axiale Achse der Scheibenbremse auch horizontal ausgerichtet. Die horizontale Anordnung des elektromechanischen Aktuators und die horizontale Anordnung der genannten Bauteile in dem elektromechanischen Aktuator wirken sich vorteilhaft auf Umweltvibrationen oder Vibrationen, ausgelöst durch den Elektromotor selbst, aus. Insbesondere die Lagerung des Elektromotors, der Antriebswelle, der Magnetbremse und des Getriebes werden durch geringere Vibrationen weniger belastet, wodurch die Lebensdauer der Lager steigt. Sofern bauraumbedingt ein horizontal angeordneter elektromechanischer Aktuator in einem Fahrzeug nicht einsetzbar ist, ist auch eine, bezogen auf die axiale Achse der Scheibenbremse, vertikale Anordnung des elektromechanischen Aktuators und, bezogen auf die Bremsbeläge, eine vertikale Anordnung der Antriebswelle, des Elektromotors, der Magnetbremse und des Getriebes denkbar. Die als kraftschlüssige Reibbremse ausgebildete Magnetbremse weist in einer Weiterbildung, horizontal in Bezug auf die axiale Achse der Scheibenbremse, in dem Magnetbremsgehäuse, zusätzlich eine Magnetspule, einen beweglichen Anker, eine zwischen den Reibbelägen angeordnete Reibscheibe und Druckfedern zum Zuspannen der Reibbeläge gegen die Reibscheibe auf. Die Magnetbremse ist mit der Antriebswelle gekoppelt, wobei die Antriebswelle horizontal durch die Bremse geführt ist.

In einer letzten Ausführung ist die Magnetbremse dazu ausgebildet, in Bezug auf den Elektromotor, drehrichtungsunabhängig die Kurvenscheibe zu fixieren. Drehrichtungsunabhängige Bremsen können sich, entgegen einer drehrichtungsabhängigen Bremse, im Uhrzeigersinn oder gegen den Uhrzeigersinn bewegen.

Nachfolgend werden ausgewählte Ausführungsbeispiele der Erfindung anhand der beigefügten Figuren erläutert.

Es zeigt:
Fig. 1 eine Scheibenbremse mit einem elektromechanischen Aktuator in der Draufsicht,
Fig. 2 eine geschnittene Seitenansicht des elektromechanischen Aktuators nach Fig. 1,
Fig. 3 eine Explosionszeichnung einer Magnetbremse des elektromechanischen Aktuators nach Fig. 1 und Fig. 2,
Fig.4 eine geschnittene Seitenansicht des elektromechanischen Aktuators nach Fig. 1 mit einer alternativ angeordneten Magnetbremse,
Fig. 5 eine Explosionszeichnung der alternativ angeordneten Magnetbremse des elektromechanischen Aktuators nach Fig.1 und Fig. 4.

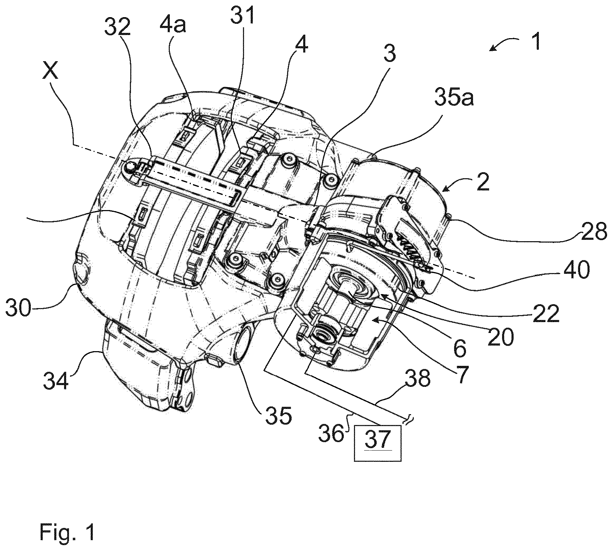

In Fig. 1 ist eine Scheibenbremse 1 mit einem an die Scheibenbremse 1 angeflanschten elektromechanischen Aktuator 2 abgebildet. Der elektromechansiche Aktuator 2 ist auf einem Bremssattel 30, über einer innerhalb des elektromechansichen Aktuators angeordneten Kraftübertragungseinrichtung 3 zum Zustellen einer zwischen zwei Bremsbelägen 4, 4a angeordneten und nicht gezeigten Bremsscheibe, angeordnet. Die Bremsbeläge 4, 4a werden je über eine Niederhaltefeder 31, 31a und einem Belaghaltebügel 32 gegen ein Herausfallen aus einem Bremsträger 34 radial in Position gehalten. Der Bremssattel 30 ist weiterhin entlang einer axialen Achse X über zwei Führungsbolzen 35, 35a gleitend gelagert. Der elektromechanische Aktuator 2 ist, in Bezug auf die axiale Achse X, horizontal an dem Bremssattel 30 angeflanscht. Ein an dem Aktuatorgehäuse 28 angeflanschtes mehrphasiges Stromkabel 36 überträgt zum einen Steuersignale zum Betätigen des elektromechanischen Aktuators 2 von einer Steuereinheit 37 an den elektromechanischen Aktuator 2. Zum anderen stellt das mehrphasige Stromkabel 36 eine Eingangsspannung für einen in dem elektromechanischen Aktuator 2 angeordneten Elektromotor 7 bereit. Die Spannungsversorgung der Magnetbremse 20 wird über einen Magnetbremsanschluss 40 bereitgestellt. Über eine Signalkabel 38 werden die Spannungsversorgung und die Übertragung von Signalen des nicht dargestellten Inkrementalsensors, auch bekannt als Positionssensor oder Drehwinkelsensor, bereitgestellt.

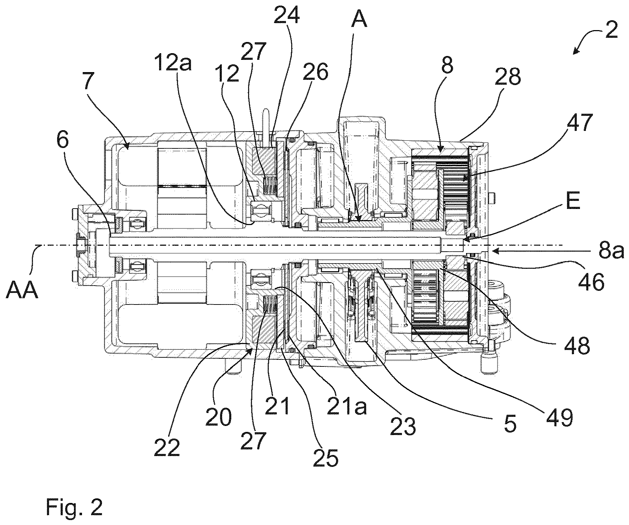

Zusätzlich sind in dem Aktuatorgehäuse 28 eine horizontal angeordnete Antriebswelle 6, ein Getriebe 8 und eine Kurvenscheibe 5 angeordnet (in Fig.2 näher erläutert).

Fig. 2 zeigt den elektromechanischen Aktuator 2 nach Fig. 1 im Detail. Der Elektromotor 7 ist entlang einer axialen Achse AA des elektromechanischen Aktuators 2, auf der gegenüberliegenden Seite des Getriebes 8, an der Antriebswelle 6 angeordnet und erzeugt eine von dem Getriebe 8 übersetzte Drehbewegung. Die Antriebswelle 6 ist über ein Sonnenrad 46 des Getriebes 8 mit dem Getriebe 8 wirkverbunden. Die Verbindung der Antriebswelle 6 mit dem Sonnenrad 46 des Getriebes 8 wird als Antriebswelleneingang E bezeichnet. Als Planetenräder 47 ausgebildete Zahnräder 47 übertragen die Drehbewegung des Elektromotors 7 auf einen Steg 48 des Getriebes 8, der wiederum mit einer Hohlwelle 49 gekoppelt ist. Die Hohlwelle 49 überträgt die vom Getriebe 8 übersetzte Drehbewegung des Elektromotors 7 auf die Kurvenscheibe 5. Die Hohlwelle 49 ist gleichzeitig als Antriebswellenausgang A definiert.

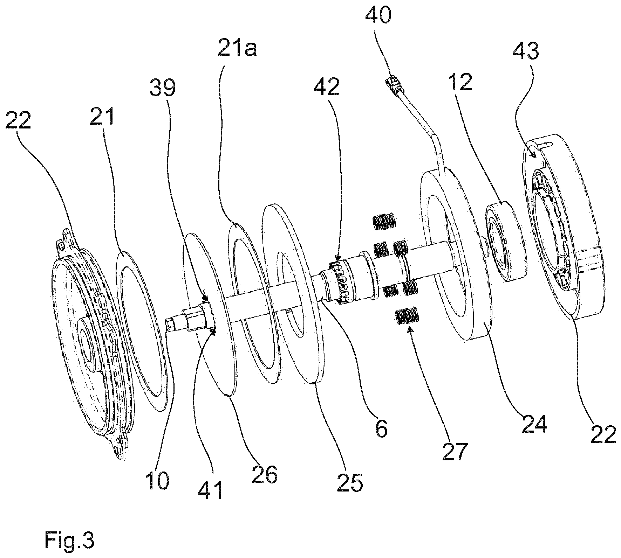

Die Kurvenscheibe 5 wandelt die Drehbewegung des Elektromotors 7 in eine translatorische Bewegung, also in eine axiale Linearbewegung, um. Die Magnetbremse 20 ist formschlüssig an der Antriebswelle 6, zwischen dem Elektromotor 7 und der Kurvenscheibe 5 angeordnet. Horizontal ist an dem Antriebswellenausgang A ein als Aufnahme 10 ausgebildeter Sechskant 10 an der Antriebswelle 6 angeordnet. Der Sechskant 10 ermöglicht ein mechanisches Zurückdrehen der Antriebswelle 6 entgegengesetzt der Drehrichtung des Elektromotors 7 bzw. ein Öffnen der Bremsbeläge 4, 4a (s. Fig. 1) von der Bremsscheibe. Die Magnetbremse 20 umfasst unter anderen ein Magnetbremsgehäuse 22. An einer Innenseite 23 des Magnetbremsgehäuses 22 ist ein Lager 12 zur Aufnahme einer Lagerstelle 12a der Antriebswelle 6 angeordnet. Die Magnetbremse 20 ist als Reibbremse ausgebildet. Das heißt, dass die Magnetbremse 20 weiterhin zwei durch eine Reibscheibe 26 getrennte Reibbeläge 21, 21a aufweist. Die Reibscheibe 26 ist formschlüssig über ein Zahnprofil 39, s. Fig. 3) mit der Antriebswelle 6 verbunden. Die Reibscheibe 26 dreht sich also mit der Antriebswelle 6 mit. Antriebsseitig, daher in Richtung des Elektromotors 7, ist eine sich nicht mit der Antriebswelle 6 mitdrehende Magnetspule 24 in der Magnetbremse 20 angeordnet. Anders ausgedrückt, die Magnetspule 29 ist feststehend in dem Magnetbremsgehäuse 22 angeordnet. Über einen Magnetbremsenanschluss 40 wird die Magnetspule 24 bestromt und je nach angelegter Spannung wirkt ein unterschiedlich starkes Magnetfeld auf einen horizontal beweglichen Anker 25. Der bewegliche Anker 25 ist in dem Magnetbremsgehäuse 22, zwischen dem Reibbelag 21a und der Magnetspule 24 angeordnet. Anschließend wird die Reibscheibe 26 mit den Reibbelägen 21, 21a, je nach aufgebrachter Spannung an der Magnetspule 24 über Druckfedern 27, zwischen dem beweglichen Anker 25 und dem Magnetbremsgehäuse 22, zusammengedrückt bzw. eingeklemmt, wodurch die Drehbewegung des Elektromotors 7 über die Antriebswelle 6 blockiert wird, indem die Druckfedern 27 den beweglichen Anker 25 gegen die Reibscheibe 26 und die Reibbeläge 21, 21a gegen das in Fig. 1 und Fig. 2 gezeigte Aktuatorgehäuse 28 pressen.

Wie die Magnetbremse 20 im Detail aussieht zeigt Fig. 3. Insbesondere ist die formschlüssig mit der Antriebswelle 6 verbundene Reibscheibe 26 sichtbar. Mittig der Reibscheibe 26 ist eine Öffnung 41 mit dem Zahnprofil 39 angeordnet. Die Öffnung 41 dient der Aufnahme der Antriebswelle 6, wobei die Reibscheibe 26 auf einen an der Antriebswelle 6 angeordneten Zahnkranz 42 geschoben ist. Die Magnetspule 24 ist in einer Aussparung 43 des Magnetbremsgehäuses 22 angeordnet und das Magnetbremsgehäuse 22 nimmt das Lager 12 für die Lagerstelle 12a zum Lagern der Antriebswelle 6 auf. Das Magnetbremsgehäuse 22 ist im Aktuatorgehäuse 28 (Fig. 1, Fig. 2) gelagert.

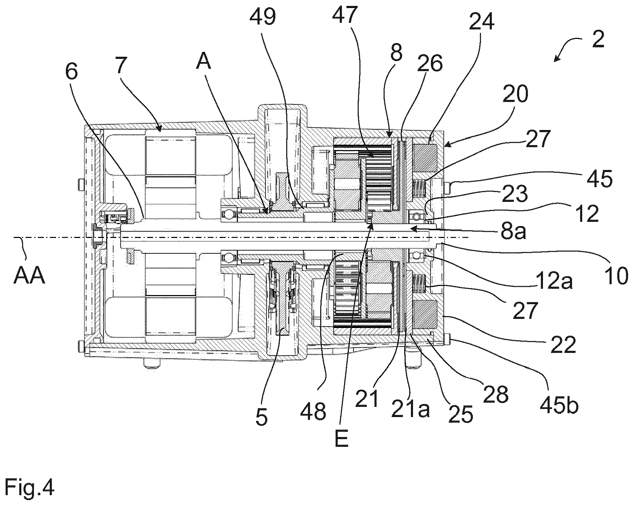

In Fig. 4 ist noch einmal der elektromechanische Aktuator 2 gemäß Fig. 1 und Fig. 2 abgebildet. Entgegen der Fig. 1 und Fig.2 ist die Magnetbremse 20 an der Antriebswelle 6, ausgehend von dem Elektromotor 7, axial hinter der Kurvenscheibe 5 und dem Getriebe 8. angeordnet. Die Magnetbremse 20 ist ein Teil des Aktuatorgehäuses 28 und bildet einen Verschluss des elektromechanischen Aktuators 2 am Antriebswellenausgang A.

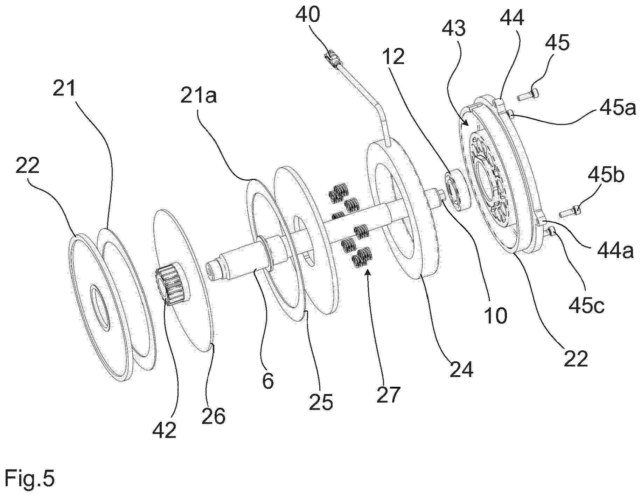

In Fig. 5 ist die alternative Magnetbremse 20 nach Fig.4 im Detail gezeigt. Die alternative Magnetbremse 20 weist am Magnetbremsgehäuse 22 zusätzlich Bohrungen 44, 44a und Verbindungselemente 45, 45a, 45b, 45c zur Anbindung der Magnetbremse 20 an das Aktautorgehäuse 28 auf. Darüber hinaus ist der Zahnkranz 42 axial, entlang der Antriebswelle 6, direkt auf der Reibscheibe 26 in Richtung des Getriebes 8 angeordnet. Der Zahnkranz 42 ist mit dem Getriebe 8 wirkverbunden.

### Bezugszeichenliste (Bestandteil der Beschreibung

- 1: Scheibenbremse
- 2: elektromechanischer Aktuator
- 3: Kraftübertragungseinrichtung
- 4, 4a: Bremsbeläge
- 5: Kurvenscheibe
- 6: Antriebswelle
- 7: Elektromotor
- 8: Getriebe
- 8a: Getriebeeingang
- 10: Sechskant/ Aufnahme
- 12: Lager
- 12a: Lagerstelle
- 20: Magnetbremse
- 21, 21a: Reibbeläge
- 22: Magnetbremsgehäuse
- 23: Innenseite des Magnetbremsgehäuses 22
- 24: Magnetspule
- 25: beweglicher Anker
- 26: Reibscheibe
- 27: Druckfedern
- 28: Aktuatorgehäuse
- 30: Bremssattel
- 31, 31a: Niederhaltefedern
- 32: Belaghaltebügel
- 34: Bremsträger
- 35, 35a: Führungsbolzen
- 36: mehrphasiges Stromkabel
- 37: Steuereinheit
- 38: Signalkabel
- 39: Zahnprofil
- 40: Magnetbremsanschluss
- 41: Öffnung der Reibscheibe
- 42: Zahnkranz
- 43: Aussparung des Magnetbremsgehäuses 22
- 44, 44a: Bohrungen des Magnetbremsgehäuses 22
- 45, 45a, 45b, 45c: Verbindungselemente
- 46: Sonnenrad
- 47: Planetenräder
- 48: Steg
- 49: Hohlwelle
- E: Antriebswelleneingang
- A: Antriebswellenausgang
- AA: axiale Achse des elektromechanischen Aktuators 2
- X: Axiale Achse

## Patentansprüche

1. Scheibenbremse (1) mit einem elektromechanischen Aktuator (2), insbesondere einem elektromechanischen Parkbremsaktuator, wobei die Scheibenbremse (1) eine Kraftübertragungseinrichtung (3) aufweist, der elektromechanische Aktuator (2) mit der Kraftübertragungseinrichtung (3) entlang einer axialen Achse (X) der Scheibenbremse (1) wirkverbunden ist, die Kraftübertragungseinrichtung (3) dazu eingerichtet ist eine Bremsscheibe über zwei Bremsbeläge (4, 4a) zuzuspannen, und der elektromechanische Aktuator (2) folgende Merkmale umfasst:
- eine Antriebswelle (6),
- einen an der Antriebswelle (6) angeordneten Elektromotor (7),
- eine an einer Abtriebswelle 49 angeordnete Kurvenscheibe (5),
- und ein an der Antriebswelle (6) angeordnetes Getriebe (8) zur Übertragung des Drehmoments des Elektromotors (7) auf die Kraftübertragungseinrichtung (3),
wobei der elektromechanische Aktuator (2)
eine Magnetbremse (20) aufweist und die Magnetbremse (20) formschlüssig an der Antriebswelle (6) zwischen dem Elektromotor (7) und
einem Antriebswellenausgang (A) angeordnet ist , **dadurch gekennzeichnet, dass** die Magnetbremse (20) als kraftschlüssige Reibbremse ausgebildet ist, wobei die Antriebswelle (6) an einem Antriebswellenausgang (A) zum mechanischen Lösen der Bremsbeläge (4, 4a) von der Bremsscheibe, eine Aufnahme (10) für ein Werkzeug aufweist.

2. Scheibenbremse (1) nach Anspruch 1, **dadurch gekennzeichnet, dass** die Magnetbremse (20) formschlüssig, an der Antriebswelle (6), zwischen dem Elektromotor (7) und der Kurvenscheibe (5), angeordnet ist und das die Magnetbremse (20) über die Antriebswelle (6) die Kurvenscheibe (5) während einer Parkbremsfunktion arretiert.

3. Scheibenbremse (1) nach Anspruch 1, **dadurch gekennzeichnet, dass** die Magnetbremse (20) formschlüssig an der Antriebswelle (6), axial auf der gegenüberliegenden Seite des Elektromotors 7, an einem Getriebeeingang (8a) angeordnet ist und das die Magnetbremse (20) über die Antriebswelle (6) die Kurvenscheibe (5) während einer Parkbremsfunktion arretiert.

4. Scheibenbremse (1) nach Anspruch 3, **dadurch gekennzeichnet, dass** die als kraftschlüssige Reibbremse ausgebildete Magnetbremse (20) eine Reibscheibe (25) mit beidseitig der Reibscheibe (25) gegenüberliegend angeordneten Reibbelägen (21, 21a) aufweist und die Reibscheibe (25) an der Antriebswelle (6), in einem Elektromotor (7) oder in einem Magnetbremsgehäuse (22), angeordnet ist.

5. Scheibenbremse (1) nach Anspruch 4, **dadurch gekennzeichnet, dass** die Aufnahme (10) als Sechskant ausgebildet ist.

6. Scheibenbremse (1) nach einem der vorangegangenen Ansprüche, **dadurch gekennzeichnet, dass** das Magnetbremsgehäuse (22) ein Lager (12) zur Aufnahme einer Lagerstelle (12a) der Antriebswelle (6) aufweist.

7. Scheibenbremse (1) nach einem der vorangegangenen Ansprüche, **dadurch gekennzeichnet, dass** die Antriebswelle (6), der Elektromotor (7), die Magnetbremse (20) und das Getriebe (8), in Bezug auf die Bremsbeläge (4, 4a), horizontal oder vertikal in dem elektromechanischen Aktuator (2) angeordnet sind.

8. Scheibenbremse (1) nach Anspruch 4, **dadurch gekennzeichnet** das die als kraftschlüssige Reibbremse ausgebildete Magnetbremse (20) in dem Magnetbremsgehäuse (22) zusätzlich eine Magnetspule (24), einen beweglichen Anker (25), eine zwischen den Reibbelägen (21, 21a) angeordnete Reibscheibe (26) und Druckfedern (27) zum Zuspannen der Reibbeläge (21, 21a) gegen die Reibscheibe (26) aufweist.

9. Scheibenbremse nach einem der vorangegangenen Ansprüche, **dadurch gekennzeichnet, dass** die Magnetbremse (20) dazu ausgebildet ist, in Bezug auf dem Elektromotor (7), drehrichtungsunabhängig die Kurvenscheibe (5) zu fixieren.

## Claims

1. Disc brake (1) having an electromechanical actuator (2), in particular an electromechanical parking brake actuator, wherein the disc brake (1) has a force-transmission device (3), the electromechanical actuator (2) is operatively connected to the force-transmission device (3) along an axial axis (X) of the disc brake (1), the force-transmission device (3) is configured to apply a brake disc via two brake linings (4, 4a), and the electromechanical actuator (2) comprises the following features:
- a driveshaft (6),
- an electric motor (7) which is arranged on the driveshaft (6),
- a cam disc (5) which is arranged on an output shaft (49),
- and a transmission (8) which is arranged on the driveshaft (6) and has the purpose of transmitting the torque of the electric motor (7) to the force-transmission device (3),
wherein the electromechanical actuator (2) has a magnetic brake (20), and the magnetic brake (20) is arranged in a positively locking fashion on the driveshaft (6), between the electric motor (7) and a driveshaft output (A), **characterized in that** the magnetic brake (20) is embodied as a frictionally locking friction brake, wherein the driveshaft (6) has a receptacle (10) for a tool on a driveshaft output (A) for mechanically detaching the brake linings (4, 4a) from the brake disc.

2. Disc brake (1) according to Claim 1, **characterized in that** the magnetic brake (20) is arranged in a positively locking fashion on the driveshaft (6), between the electric motor (7) and the cam disc (5), and **in that** the magnetic brake (20) arrests the cam disc (5) during a parking brake function via the driveshaft (6).

3. Disc brake (1) according to Claim 1, **characterized in that** the magnetic brake (20) is arranged in a positively locking fashion on the driveshaft (6), axially on the opposite side of the electric motor (7), on a transmission input (8a), and **in that** the magnetic brake (20) arrests the cam disc (5) during a parking brake function via the driveshaft (6).

4. Disc brake (1) according to Claim 3, **characterized in that** the magnetic brake (20) which is embodied as a frictionally locking friction brake has a friction disc (25) with friction linings (21, 21a) which are arranged opposite one another on each side of the friction disc (25), and the friction disc (25) is arranged on the driveshaft (6), in an electric motor (7) or in a magnetic brake housing (22) .

5. Disc brake (1) according to Claim 6, **characterized in that** the receptacle (10) is embodied as a hexagon.

6. Disc brake (1) according to one of the preceding claims, **characterized in that** the magnetic brake housing (22) has a bearing (12) for receiving a bearing point (12a) of the driveshaft (6).

7. Disc brake (1) according to one of the preceding claims, **characterized in that** the driveshaft (6), the electric motor (7), the magnetic brake (20) and the transmission (8) are arranged horizontally or vertically with respect to the brake linings (4, 4a), in the electromechanical actuator (2).

8. Disc brake (1) according to Claim 4, **characterized in that** the magnetic brake (20) which is embodied as a frictionally locking friction brake additionally has in the magnetic brake housing (22) a magnetic coil (24), a movable armature (25), a friction disc (26) which is arranged between the friction linings (21, 21a), and compression springs (27) for clamping the friction linings (21, 21a) against the friction disc (26).

9. Disc brake according to one of the preceding claims, **characterized in that** the magnetic brake (20) is designed to secure the cam disc (5) in a way which is independent of the direction of rotation, with respect to the electric motor (7).

## Revendications

1. Frein à disque (1) comprenant un actionneur électromécanique (2), en particulier un actionneur de frein de stationnement électromécanique, le frein à disque (1) présentant un dispositif de transfert de force (3), l'actionneur électromécanique (2) étant relié fonctionnellement au dispositif de transfert de force (3) le long d'un axe axial (X) du frein à disque (1), le dispositif de transfert de force (3) étant conçu pour serrer un disque de frein par le biais de deux garnitures de frein (4, 4a), et l'actionneur électromécanique (2) comprenant les caractéristiques suivantes :
- un arbre d'entraînement (6),
- un moteur électrique (7) disposé sur l'arbre d'entraînement (6),
- un disque à came (5) disposé sur un arbre de sortie 49,
- et une transmission (8) disposée sur l'arbre d'entraînement (6) pour le transfert du couple du moteur électrique (7) au dispositif de transfert de force (3), l'actionneur électromécanique (2) présentant un frein magnétique (20) et le frein magnétique (20) étant disposé avec complémentarité de formes sur l'arbre d'entraînement (6) entre le moteur électrique (7) et une sortie d'arbre d'entraînement (A), **caractérisé en ce que** le frein magnétique (20) est réalisé sous forme de frein à friction à engagement par force, l'arbre d'entraînement (6) présentant un logement (10) pour un outil au niveau d'une sortie d'arbre d'entraînement (A) servant au détachement mécanique des garnitures de frein (4, 4a) du disque de frein.

2. Frein à disque (1) selon la revendication 1, **caractérisé en ce que** le frein magnétique (20) est disposé, avec engagement par complémentarité de formes, sur l'arbre d'entraînement (6), entre le moteur électrique (7) et le disque à came (5), et **en ce que** le frein magnétique (20) bloque le disque à came (5) pendant une fonction de frein de stationnement par le biais de l'arbre d'entraînement (6).

3. Frein à disque (1) selon la revendication 1, **caractérisé en ce que** le frein magnétique (20) est disposé, avec engagement par complémentarité de forme, sur l'arbre d'entraînement (6), axialement sur le côté opposé du moteur électrique (7), au niveau d'une entrée de transmission (8a), et **en ce que** le frein magnétique (20) bloque le disque à came (5) pendant une fonction de frein de stationnement par le biais de l'arbre d'entraînement (6).

4. Frein à disque (1) selon la revendication 3, **caractérisé en ce que** le frein magnétique (20) réalisé sous forme de frein à friction à engagement par force présente un disque de friction (25) comprenant des garnitures de friction (21, 21a) disposées de manière opposée des deux côtés du disque de friction (25) et le disque de friction (25) est disposé sur l'arbre d'entraînement (6), dans un moteur électrique (7) ou dans un carter de frein magnétique (22).

5. Frein à disque (1) selon la revendication 4, **caractérisé en ce que** le logement (10) est réalisé sous forme d'hexagone.

6. Frein à disque (1) selon l'une des revendications précédentes, **caractérisé en ce que** le carter de frein magnétique (22) présente un palier (12) servant au logement d'un point de palier (12a) de l'arbre d'entraînement (6).

7. Frein à disque (1) selon l'une des revendications précédentes, **caractérisé en ce que** l'arbre d'entraînement (6), le moteur électrique (7), le frein magnétique (20) et la transmission (8) sont disposés horizontalement ou verticalement dans l'actionneur électromagnétique (2), par rapport aux garnitures de frein (4, 4a).

8. Frein à disque (1) selon la revendication 4, **caractérisé en ce que** le frein magnétique (20) réalisé sous forme de frein à friction à engagement par force dans le carter de frein magnétique (22) présente en outre une bobine magnétique (24), une armature mobile (25), un disque de friction (26) disposé entre les garnitures de friction (21, 21a) et des ressorts de compression (27) servant au serrage des garnitures de friction (21, 21a) contre le disque de friction (26).

9. Frein à disque selon l'une des revendications précédentes, **caractérisé en ce que** le frein magnétique (20) est réalisé pour fixer, par rapport au moteur électrique (7), le disque à came (5) indépendamment du sens de rotation.
